## Europäisches Patentamt

(19) **European Patent Office**

**Office européen des brevets**

(11) Numéro de publication: **0 097 090**
**B1**

---

(12) **FASCICULE DE BREVET EUROPEEN**

---

(45) Date de publication du fascicule du brevet:
**08.10.86**

(21) Numéro de dépôt: **83401151.2**

(22) Date de dépôt: **07.06.83**

(51) Int. Cl.⁴: **H 01 M 4/66, H 01 M 4/24**

---

(54) Anodes en matériaux composites et accumulateurs utilisant lesdites anodes.

---

(30) Priorité: **11.06.82 FR 8210257**
**22.10.82 FR 8217736**

(43) Date de publication de la demande:
**28.12.83 Bulletin 83/52**

(45) Mention de la délivrance du brevet:
**08.10.86 Bulletin 86/41**

(84) Etats contractants désignés:
**AT BE CH DE FR GB IT LI LU NL SE**

(56) Documents cités:
**DE - A - 1 671 761**
**FR - A - 994 324**
**FR - A - 1 233 686**
**FR - A - 1 472 136**
**FR - A - 2 007 392**
**GB - A - 2 027 260**
**GB - A - 2 064 209**
**US - A - 4 292 357**

**PATENTS ABSTRACTS OF JAPAN, vol. 6, no. 170 (E-128) (1048), 3 septembre 1982**

(73) Titulaire: **SOCIETE CIVILE DES COMPOSITES ELECTROLYTIQUES, 24 avenue George V, F-75008 Paris (FR)**

(72) Inventeur: **Berger, Michel, 7 Clos les Montorelles, F-34140 Meze (FR)**
Inventeur: **Schaeffner, Pierre, Le Haillan, F-33160 St Medard en Jalles (FR)**

(74) Mandataire: **Combe, André et al, CABINET BEAU DE LOMENIE 55 rue d'Amsterdam, F-75008 Paris (FR)**

---

## Description

La présente invention concerne des anodes en matériaux composites et les accumulateurs utilisant lesdites anodes.

Depuis de très nombreuses années, on sait que les caractéristiques techniques (énergie massique-tension-durée de vierendement) des batteries sont très étroitement liées à la nature et à la structure des électrodes utilisées pour ces batteries. Cela est en particulier le cas pour des batteries comportant des électrodes connues du type zinc. On a décrit, par exemple dans le brevet allemand 1 671 761 des électrodes constituées de fibres de polymère organique métallisées et dans le brevet français 994 324 des électrodes obtenues par dépôt de zinc sur une cathode de très grande surface faite, par exemple, de la superposition de toiles en cuivre amalgamé ou cadmié.

La présente invention concerne des anodes de structure particulière permettant, lorsqu'elles sont utilisées avec des cathodes connues, d'améliorer le rendement et les conditions de marche des batteries.

Les anodes selon la présente invention sont caractérisées en ce que chacune des fibres comporte entre environ 1000 et environ 30 000 fibrilles au millimètre carré, lesdites fibrilles étant revêtues d'une couche conductrice de cuivre d'épaisseur comprise entre 3 et 10 μm ladite couche de cuivre étant elle-même recouverte d'une couche de cadmium d'épaisseur comprise entre 3 et 6 μm et ladite couche de cadmium étant elle-même recouverte d'une couche de zinc d'épaisseur supérieure à environ 20 μm.

Le support des anodes selon l'invention est donc constitué par matériau sous forme de fibrilles; ledit matériau peut être conducteur (carbone, graphite . . .) ou non conducteur (matière plastique tel que polyamide, polyester, polyéthylène, ou un verre, ou un matériau réfractaire, etc.). Les matériaux sous forme de fibrilles ainsi utilisées ont une surface réelle très élevée, à savoir environ 30 à environ 200 m²/m² de surface apparente.

Ce matériau support peut être utilisé sous forme d'une bourre; cependant, il est généralement utilisé sous forme de nappes, c'est-à-dire de structures directionnellement organisées. Ces structures sont, par exemple, constituées simplement par des fils disposées parallèlement les unes aux autres selon une direction déterminée ou par des éléments tressés ou tissés.

Ledit support est recouvert d'une couche mince (3 à 10 μm) de cuivre; les propriétés essentielles de ce métal sont les suivantes: il est très conducteur de l'électricité, inerte vis-à-vis du matériau constituant le support fibrillé, aisément déposé sur ledit support et y adhère fortement, est de préférence peu sensible au milieu dans lequel l'anode selon l'invention sera plongée et peut recevoir une couche d'un métal barrière. Le dépôt de cuivre sur le support doit être réalisé de façon que chaque fibrille soit revêtue de cuivre de façon uniforme.

Le support fibrille revêtu d'une couche de cuivre reçoit ensuite une couche d'un métal barrière en l'occurrence, le cadmium. Ce métal barrière d'une part, assure la protection complète du cuivre par rapport au milieu dans lequel l'anode est plongée, d'autre part, isole le cuivre de la matière active et enfin peut recevoir une couche adhérente du matériel superficiel actif, à savoir le zinc. Le cadmium est choisi pour cela, car il a un potentiel électrique peu différent de celui du zinc.

Selon l'invention le cadmium est deposé en une couche d'épaisseur comprise entre 3 et 6 μm. Là encore, le dépôt de cadmium doit être réalisé de façon que chaque fibrille cuivrée soit revêtue de cadmium sur toute sa surface.

Enfin, la couche de cadmium est à son tour revêtue du matériau superficiel actif qui est du zinc. La couche de zinc, qui est la couche travaillante, a plus de 20 μm d'épaisseur; chaque fibrille cuivrée et cadmiée doit être revêtue de ladite couche de zinc.

La présente invention concerne donc des anodes en matériau composite, caractérisées en ce qu'elles sont formées sur un support constitué par des fibres, chacune des fibres comportant entre environ 1000 et environ 30 000 fibrilles au millimètre carré que lesdites fibrilles sont revêtues d'une couche conductrice de cuivre d'épaisseur comprise entre 3 et 10 μm, que la couche de cuivre est recouverte d'une couche de cadmium d'épaisseur comprise entre 3 et 6 μm et que ladite couche de cadmium est recouverte d'une couche de zinc d'épaisseur supérieure à environ 20 μm.

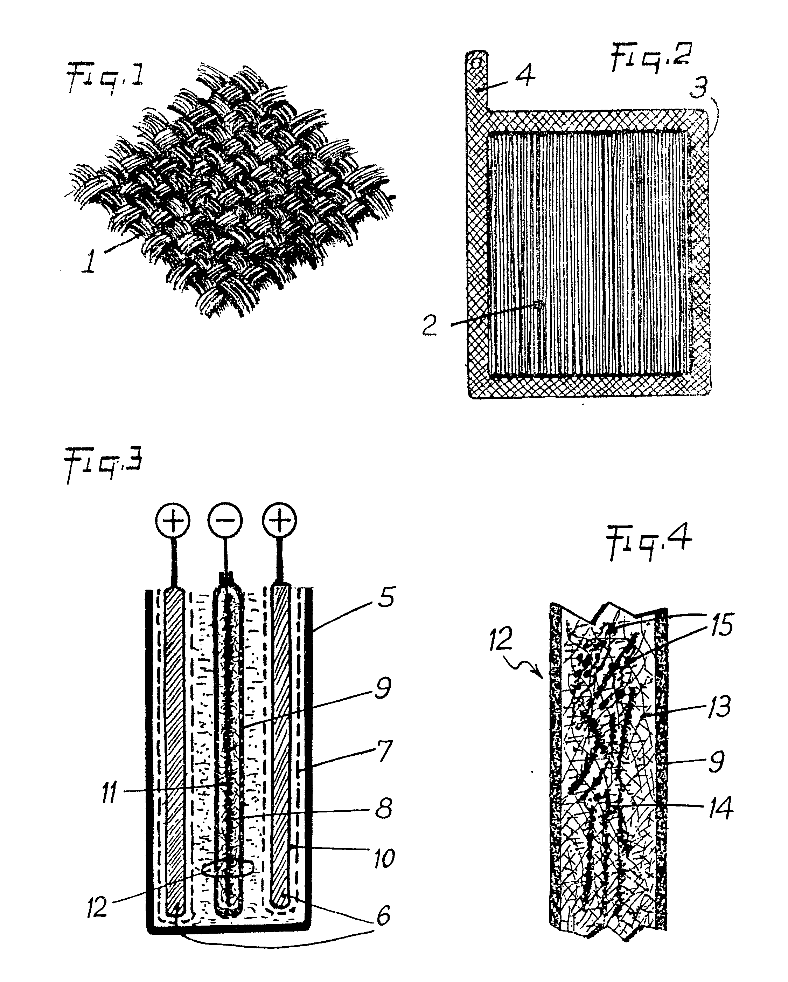

L'exemple non limitatif ci-après illustre l'invention; cet exemple est illustré par les figures 1 et 2:

– la figure 1 est une vue d'un support, en fibres de graphite par exemple, constitué de tresses disposées selon deux directions perpendiculaires;

– la figure 2 est une vue d'une anode selon l'invention dans laquelle les fibres, formées elles-mêmes de fibrilles, sont disposées parallèlement entre deux côtés d'un cadre conducteur; sur cette figure, on a representé schématiquement des fibres 2 tendues sur un cadre 3, ledit cadre étant pourvu d'une borne 4.

Dans l'exemple, on utilise comme matériau support:

– soit un tissue de fibres de carbone,

– soit des fibres de polyamides aromatiques ou non dont le diamètre est compris entre environ 5 et environ 10 μm,

– soit des fibres de verre de diamètre moyen environ 7 microns.

Sur ce matériau support (éventuellement disposé en forme de tresses tissées comme sur la figure 1 ou disposé selon une orientation unique entre deux côtés d'un cadre conducteur comme sur la figure 2), on a déposé, par trempage dans un bain contenant un sel de cuivre, une couche de cuivre d'épaisseur environ 3 μm. L'examen, au microscope du produit obtenu, montre que le dépôt de cuivre est parfaitement uniforme et que seuls les points de contact entre deux fibrilles du matériau support montrent une légère surépaisseur du dépôt local du cuivre.

Sur le produit cuivré ainsi obtenu, on dépose de préférence par voie électrolytique, ou non électrolytique, une couche de cadmium d'épaisseur environ 3 μm. Sur la couche de cadmium ainsi obtenue, chaque fibrille est revêtue d'une couche de zinc; l'épaisseur de la couche de zinc est de l'ordre de 25 μm.

L'anode selon la présente invention possède un certain nombre de propriétés spécifiques que l'on peut résumer comme suit.

1) Une structure souple et flexible (dite «poumon») permet de supporter sans contrainte mécanique la «respiration» de la matière active pendant le travail de l'électrode dans l'accumulateur. De plus, cette structure apparaît comme conférant à l'électrode une grande stabilité dimensionnelle.

Ceci se traduit par une durée de vie plus grande ainsi que par un meilleur rendement capacitaire électrique de l'anode.

2) La grande surface spécifique du support, par exemple dans le cas des matériaux composites à base de fibres de carbone et/ou de graphite (de 1 000 à 30 000 fibrilles par fibre d'environ 1 mm²), et la technique du dépôt de la matière active à échelle moléculaire assurent une surface de contact optimale entre la matière active et le support collecteur, d'où un drainage total des électrons émis pendant la décharge et la possibilité d'obtenir de grandes intensités de décharges telles que, par exemple, 10 fois la capacité électrique de l'élément, assurant également une réversibilité totale du processus électrochimique évitant la formation de dendrites à cause d'une faible densité de courant locale.

3) La grande surface que présente également la matière active vis-à-vis de l'électrolyte permet de grandes densités d'échanges ioniques qui diminuent la résistance interne de l'accumulateur jusqu'à des valeurs de l'ordre de 35 microohms/cm² et qui participent, comme dans 2), à la délivrance de grandes intensités globales à partir de très faibles densités de courant locales.

4) L'utilisation de cette technologie de fabrication d'électrodes conduit à des supports collecteurs de faibles masses où le pourcentage de matière inerte ne participant pas à la réaction électrochimique est faible par rapport à la masse de la matière active et comprise entre 30% et 60%. Ces faibles masses permettent de développer des énergies massiques élevées, par exemple de l'ordre de 80 Wh/kg à C/5 pour un couple Zinc-Nickel.

L'invention concerne également les batteries (accumulateurs) utilisant les anodes décrites ci-dessus; ces accumulateurs peuvent comporter comme cathodes les diverses cathodes connues compatibles avec les anodes dont la substance active est du zinc; dans tous les cas, il semble que les anodes selon l'invention apportent aux accumulateurs obtenus des avantages substantiels.

Cela est notamment le cas pour les accumulateurs dont le couple est constitué par du zinc et du nickel. Ces accumulateurs présentent toutefois certains inconvénients; en effet, au cours de la décharge, l'oxydation de l'anode en milieu alcalin conduit à la formation, d'hydroxyde de zinc amphotère qui réagit alors avec l'électrolyte pour former des zincates solubles. Les ions zincates alors formés ont tendance à migrer au sein de tout l'électrolyte baignant l'accumulateur.

Au cours de la recharge de l'accumulateur, le dépôt de zinc métallique est obtenu par réduction de ces ions zincates qui migrent vers l'électrode de zinc à partir de l'électrolyte où ils étaient solubilisés. Le zinc se dépose alors de façon hétérogène sur l'électrode à cause de l'hétérogénéité des lignes de courant issues des électrodes et des collecteurs. De plus, cette hétérogénéité conduit à la formation de dendrites pour les lignes de courant de forte intensité. Ces dendrites conduisent à des «effets de pointe» bien connus en électrolyse qui font croître les dendrites dans une direction perpendiculaire à l'électrode. Cette croissance s'effectue même au travers des séparateurs disposés entre les électrodes positives et négatives et, par suite, engendre des courts-circuits internes.

Les zincates sont également générateurs d'un autre phénomène dû à une «sédimentation» vers le fond du bac au cours des cycles qui réduisent progressivement la surface de travail de l'anode et conduisent à une chute lente de capacité de l'accumulateur.

La durée de vie des anodes est considérablement écourtée par ces phénomènes et le nombre de cycles s'en trouve réduit à quelques dizaines.

Il a été trouvé et c'est là un objet de la présente invention que l'on pouvait surmonter les difficultés décrites ci-dessus en enveloppant chacune des anodes décrites ci-dessus dans une membrane cellulosique semi-perméable et en saturant l'électrolyte alcalin situé à l'intérieur de ladite membrane avec un zincate.

Par membrane sémi-perméable, on entend une membrane cellulosique du type des membranes utilisées en électrodialyse qui sont perméables aux ions OH⁻ et imperméables aux cations.

L'électrolyte alcalin utilisé est du type connu obtenu par exemple en dissolvant dans un litre d'eau environ 300 g de potasse et 30 g d'hydroxyde de lithium. Cependant, selon l'invention, cette solution doit être saturée en zincate, c'est-à-dire pratiquement saturée à chaud par de l'oxyde de zinc (on admet ainsi de l'ordre de 70 g/l d'oxyde de zinc).

De plus, il a été trouvé que, dans les compartiments anodiques ainsi réalisés (compartiments comportant donc une anode selon l'invention, un électrolyte alcalin saturé en zincate et compartiments limités par ladite membrane cellulosique semi-perméable), l'électrolyte alcalin devait être gélifié. Cette gélification, connue dans son principe, peut être avantageusement réalisée en additionnant à l'électrolyte de 1 à 5% en poids d'un adjuvant cellulosique soluble comme, par exemple, la diéthylaminoéthylcellulose. Cette gélification a pour rôle de conférer à l'électrolyte présent dans le compartiment anodique une viscosité élevée (supérieure à environ 20 000 centipoises) (20 Pa.s).

Un accumulateur selon l'invention est illustré schématiquement sur les figures 3 et 4.

La figure 3 représente schématiquement en coupe un accumulatuer 5 construit selon l'invention. Il est constitué de deux cathodes Nickel 6 entourées de feutre polypropylène 7 et d'une anode zinc 8 ensachée dans une enveloppe semi-perméable 9. Cette enveloppe matérialise deux compartiments, l'un cathodique 10, l'autre anodique 11 au sein desquels baignent les électrolytes cathodique et anodique.

La figure 4 représente schématiquement une portion 12 du compartiment anodique de la figure 1 considérablement agrandie. Cette portion 12 est limitée de chaque côté par la membrane 9 enserrant l'anode 8 constituée par un collecteur filamentaire 13 fixant la matière active 14 (zinc). Le substrat poreux de l'anode est imprégné d'électrolyte gel anodique qui stabilise l'hydroxyde de zinc 15 au cours de la décharge.

L'exemple non limitatif ci-après décrit une réalisation de l'invention.

On utilise comme anode un tissu composé d'un support revêtu de cuivre, puis d'une couche de cadmium puis d'une couche de zinc; cette anode a été décrite ci-dessus.

L'accumulateur a la structure représentée sur la figure 3; cet accumulateur dont les électrodes ont les dimensions de 130×180 mm comporte une anode centrale et deux cathodes latérales. L'anode pèse environ 42 g (15 g de collecteur support et 27 g de zinc). Cette anode est imprégnée d'un électrolyte alcalin 6N saturé en zincates et gélifié par 1,5% de cellulose glycolate de sodium. Elle est ensuite ensachée dans une enveloppe en cellophane (R) régénérée d'épaisseur égale à 0,2 mm.

Les deux cathodes en nickel comportent chacune 25 g de collecteur support et 35 g d'hydroxyde de nickel; elles sont ensachées dans un feutre de polypropylène et imprégnées d'un electrolyte alcalin 6N gélifié à 1,5% de cellulose glycolate de sodium.

Les électrodes sont introduites dans un bac de 12 mm d'épaisseur.

Cet élément de capacité nominale égale à 10 Ah est formé en 10 cycles de charge et décharge à C/10. Les cycles sont alors poursuivis à C/5 à 80% de profondeur de régime. On a ainsi obtenu 16 Wh pour un poids de 200 g (bac non compris) soit une énergie massique de 80 Wh/kg à C/5. La résistance interne est inférieure à 0,3 ohm.

Les rendements de cyclage sont supérieurs à 95%.

On ne remarque pas de chute de capacité au cours des 100 premiers cycles, contrairement aux accumulateurs nickel-zinc connus.

Pendant le fonctionnement de l'accumulateur, lors de la décharge, on a vérifié la formation et la stabilité de l'hydroxyde de zinc au sein de l'anode. La membrane cellulosique les maintient au sein du compartiment anodique. La haute viscosité de l'électrolyte et la très grande porosité de l'anode empêchent leur migration et leur sédimentation.

Au cours de la recharge, la très grande surface spécifique de l'anode permet la réversibilité totale et la réduction de l'hydroxyde de zinc en zinc métallique et, ceci, sans possibilité de formation de dendrites et d'effets de pointe rencontrés jusqu'ici avec le zinc. Ces caractéristiques empêchent la consommation de zinc par l'électrolyte, on obtient donc ainsi des capacités et des rendements constants au cours des cycles, contrairement aux accumulateurs nickel-zinc conventionnels.

## Revendications

1. Anodes en matériau composite comportant un support constitué par des fibres metallisées, caractérisées en ce chacune des fibres comporte entre environ 1000 et environ 30 000 fibrilles au millimètre carré, que lesdites fibrilles sont revêtues d'une couche conductrice de cuivre d'épaisseur comprise entre 3 et 10 µm, que la couche de cuivre est recouverte d'une couche de cadmium d'épaisseur comprise entre 3 et 6 µm et que ladite couche de cadmium est recouverte d'une couche de zinc d'épaisseur supérieure à environ 20 µm.

2. Accumulateurs, caractérisés en ce qu'ils comprennent au moins une anode selon la revendication 1.

3. Accumulateurs selon la revendication 2, caractérisés en ce que lesdites anodes sont ensachées dans une membrane cellulosique semi-perméable contenant un électrolyte alcalin saturé en zincate.

4. Accumulateurs selon la revendication 3, caractérisés en ce que ledit électrolyte est gélifié de façon à présenter une viscosité supérieure à environ 20 000 centipoises (20 Pa.s).

5. Accumulateurs selon l'une des revendications 2, 3 et 4, caractérisés en ce qu'ils comportent des cathodes à base de nickel.

## Patentansprüche

1. Anoden aus Verbundmaterial mit einem aus metallisierten Fasern bestehenden Träger, dadurch gekennzeichnet, dass jede der Fasern etwa 1000 bis 30 000 Fibrillen pro Quadratmillimeter enthält, dass die Fibrillen mit einer Leiterschicht aus Kupfer von einer Stärke zwischen 3 und 10 µm überzogen sind, dass die Kupferschicht von einer Schicht aus Cadmium mit einer Stärke zwischen 3 und 6 µm bedeckt ist und dass die Cadmiumschicht von einer Zinkschicht mit einer Stärke von mehr als etwa 20 µm bedeckt ist.

2. Akkumulatoren, dadurch gekennzeichnet, dass sie mindestens eine Anode nach Anspruch 1 enthalten.

3. Akkumulatoren nach Anspruch 2, dadurch gekennzeichnet, dass die Anoden in einer halbdurchlässigen, einen mit Zinkat gesättigten alkalischen Elektrolyt enthaltenden Zellulosemembran gepackt sind.

4. Akkumulatoren nach Anspruch 3, dadurch gekennzeichnet, dass der Elektrolyt derart geliert ist, dass er eine Viskosität von mehr als etwa 20 000 Centipoise (20 Pa.s) aufweist.

5. Akkumulatoren nach einem der Ansprüche 2, 3 und 4, dadurch gekennzeichnet, dass sie Kathoden auf Nickelbasis umfassen.

**Claims**

1. Anodes of a composite material, comprising a support constituted by mettalized fibers, characterized in that each fiber comprises between about 1000 and 30,000 fibrils per square millimeter, in that said fibrils are coated with a conducting layer of copper of thickness of between 3 and 10 μm, in that the layer of copper is covered with a layer of cadmium of thickness of between 3 and 6 μm, and in that said cadmium is covered with a layer of zinc of thickness greater than about 20 μm.

2. Accumulators, characterized in that they use at least one anode according to claim 1.

3. Accumulators according to claim 2, characterized in that said anodes are in a sack of a semipermeable cellulosic membrane containing an alkaline electrolyte saturated in zincate.

4. Accumulators according to claim 3, characterized in that said electrolyte is gelled so as to have a viscosity higher than about 20,000 centipoises (20 Pa.s).

5. Accumulators according to any one of claims 2, 3 and 4, characterized in that they comprise nickel-based cathodes.

Fig.1

Fig.2

Fig.3

Fig.4